# EUROPÄISCHE PATENTSCHRIFT

(11) **EP 0 789 861 B1**
(45) Veröffentlichungstag und Bekanntmachung des Hinweises auf die Patenterteilung: **26.08.1998**
(21) Anmeldenummer: 95935353.3
(22) Anmeldetag: 23.10.1995
(51) Int. Cl.: G05B 23/02

(54) **VERFAHREN ZUR ANALYSE VON PROZESSDATEN EINER TECHNISCHEN ANLAGE**
PROCESS FOR ANALYSING PROCESS DATA IN AN INDUSTRIAL PLANT
PROCEDE D'ANALYSE DES DONNEES D'OPERATIONS D'UNE INSTALLATION TECHNIQUE

(30) Priorität: 02.11.1994 DE 4438859
(43) Veröffentlichungstag der Anmeldung: 20.08.1997
(73) Patentinhaber: SIEMENS AKTIENGESELLSCHAFT, 80333 München (DE)
(72) Erfinder: MEDERER, Hans-Gerd, D-91052 Erlangen (DE); FÜHRING, Thorsten, D-81739 München (DE); JACOBY, Konstantin, D-82178 Puchheim (DE); PANYR, Jiri, D-81373 München (DE); MICHELIS, Rainer, D-82041 Oberhaching (DE)
(86) Internationale Anmeldenummer: DE9501471
(87) Internationale Veröffentlichungsnummer: WO9614609

(56) Entgegenhaltungen:
- 1993, INTERNATIONAL CONFERENCE ON SYSTEMS, MAN AND CYBERNETICS, Bd. 3, 17. - 20.Oktober 1993 LE TOUQUET FR, Seiten 61-66, R.DORAISWAMI ET AL. 'Autonomous Control Systems: Monitoring, Diagnosis, and Tuning'
- AUTOMATISIERUNGSTECHNIK - AT, Bd. 36, Nr. 11, November 1988 MUNCHEN DE, Seiten 421-426, R.ISERMANN 'Wissensbasierte Fehlerdiagnose technischer Prozesse'
- PATENT ABSTRACTS OF JAPAN vol. 16 no. 527 (P-1447) ,29.Oktober 1992 & JP,A,04 198729 (TOSHIBA) 20.Juli 1992,

## Beschreibung

Die Erfindung bezieht sich auf ein Verfahren zur Analyse von Prozeßdaten einer technischen Anlage, insbesondere einer Kraftwerksanlage, deren Anlagenteile automatisch gesteuert werden.

In einer Leitwarte zur Steuerung einer technischen Anlage, insbesondere einer Kraftwerksanlage, fallen ständig große Mengen verschiedener Meßdaten an, die in ihrer Gesamtheit den Anlagen- oder Betriebszustand beschreiben. Das Bedienpersonal der Anlage steht vor der Aufgabe, die für den Betriebszustand jeweils relevanten Meßdaten oder Meßgrößen zu identifizieren und ihre Werte in bezug auf den Zustand der Anlage zu verfolgen, zu analysieren und zu interpretieren. Dabei ist die Prozeßführung der Leitwarte über Bildschirme durch Normen und Richtlinien in Form von Vorschriften weitgehend festgelegt. Diese Vorschriften umfassen Symbole für Anlagenteile oder Anlagenelemente, wie z.B. Pumpen und Ventile, und die Farbgebung von Anzeigen sowie den Aufbau der Anzeigen eines Leitsystems. Zusatzlich zu den verschiedenen Anzeigen ist üblicher; weise ein Anlagenschaltbild vorhanden, das die gesamte Anlage im Überblick darstellt. Mit zunehmender Automatisierung und Komplexität einer derartigen technischen Anlage nimmt aber auch die Anzahl der erfaßten Meßdaten und damit die Wahrscheinlichkeit zu, daß die für den jeweiligen Betriebszustand der Anlage wichtigen Informationen nicht als solche frühzeitig identifiziert werden. Entsprechende Gegenmaßnahmen können somit erst verspätet eingeleitet werden.

Der Erfindung liegt daher die Aufgabe zugrunde, ein Verfahren zur Analyse von Prozeßdaten einer derartigen technischen Anlage, insbesondere einer Kraftwerksanlage, anzugeben, mit dem Besonderheiten im Anlagenprozeß unmittelbar aufgezeigt und frühzeitige Gegenmaßnahmen, insbesondere bei Störungen, ermöglicht werden.

Erfindungsgemäß wird diese Aufgabe bei einem Verfahren zur Analyse von Prozeßdaten einer technischen Anlage, insbesondere einer Kraftwerksanlage, deren Anlagenteile automatisch gesteuert werden, gelöst,
- indem den Anlagenprozeß charakterisierende Merkmale vorgegeben und für den Anlagenprozeß relevante Parameter bereitgestellt werden,
- indem für jeden Anlagenteil das Vorhandensein jedes Merkmals anhand der Parameter geprüft wird,
- indem anhand von verschiedenen Anlagenteilen gemeinsamen Merkmalen und verschiedenen Merkmalen gemeinsamen Anlagenteilen Korrelationen zwischen Kombinationen von Anlagenteilen bzw. Merkmalen bestimmt werden, und
- indem Anlagenteile und/oder Merkmale als Informationselemente derart zueinander positioniert dargestellt werden, daß der Abstand zwischen jeweils zwei Informationselementen den Grad ihrer Korrelation repräsentiert.

Die Erfindung geht dabei von der Überlegung aus, daß auf der Grundlage des mathematischen Modells der formalen Begriffsanalyse große Mengen von Prozeßdaten nach dem Prinzip "Kontextuelle Nähe entspricht räumlicher Nähe" hinsichtlich ihrer Bedeutung für den Anlagenzustand gefiltert, verdichtet und/oder strukturiert werden können. Die Grundzüge der formalen Begriffsanalyse sind beispielsweise zusammengefaßt in den Druckschriften M. Luxemburger " Implikationen, Abhängigkeiten und Galois-Abbildungen. Beiträge zur formalen Begriffsanalyse", Dissertation, TH Darmstadt (1993) und Proc. NATO Adv. Study Inst., Banff/Can. 1981, PP 445..470 (1982) sowie G. Kalmbach, "Diskrete Mathematik. Ein Intensivkurs für Studienanfänger mit Turbo-Pascal-Programmen" (1981).

Vom Informationssystem der technischen Anlage, das Teil des Betriebssystems der Anlage ist, wird eine Liste von Merkmalen bereitgestellt, wobei die Merkmale in ihrer Gesamtheit alle möglichen Betriebs- oder Anlagenzustände beschreiben. Die Merkmale selbst sind beispielsweise Statusmeldungen oder andere, den Zustand eines Anlagenteils eindeutig beschreibende Meldungen, die ihrerseits Glieder von Meldefolgen sein können. Die Zuordnung der Merkmale zu den Anlagenteilen erfolgt anhand von aktuell erfaßten oder modellierten (simulierten) Parametern, die ebenfalls vom Informationssystem der technischen Anlage bereitgestellt werden.

Die kontextuelle oder auch inhaltliche Nähe von jeweils zwei Anlagenteilen wird dann bestimmt durch das Verhältnis der Anzahl der ihnen gemeinsamen Merkmale zur Anzahl derjenigen Merkmale, die mindestens einer der Anlagenteile aufweist. Mit anderen Worten: Jeweils zwei Anlagenteile, die in allen Merkmalen übereinstimmen, werden als inhaltlich besonders nahe klassifiziert, während zwei Anlagenteile, die in keinem der Merkmale übereinstimmen, als inhaltlich nicht nahe klassifiziert werden.

Für die grafische Darstellung wird die inhaltliche Nähe zweier Anlagenteile in eine räumliche Nähe der die Anlagenteile repräsentierenden Informationselemente transformiert. Die räumliche Nähe jeweils zweier Merkmale wird analog bestimmt, wobei die Anzahl derjenigen Anlagenteile herangezogen wird, die diese Merkmale gemeinsam aufweisen. Die Zuordnung von Merkmalen zu jedem diese aufweisenden Anlagenteil anhand der Parameter bestimmt eindeutig die Korrelation oder den Zusammenhang zwischen diesen Merkmalen und diesem Anlagenteil.

Die von dem Informationssystem der technischen Anlage bereitgestellten Parameter sind zweckmäßigerweise Bestandteil von Ereignismeldungen, die Änderungen von Betriebszuständen oder Abweichungen vom Normalzustand der Anlage charakterisieren. Dabei sind die Ereignismeldungen anhand spezifischer Kennungen den entsprechenden Anlagenteilen eindeutig zugeordnet.

Die generierte grafische Darstellung kann lediglich eine Anordnung von Anlagenteile repräsentierenden Informationselementen oder lediglich eine Anordnung von Merkmale repräsentierenden Informationselementen sein. Vorzugsweise werden jedoch Informationselemente sowohl von Anlagenteilen als auch von Merkmalen grafisch dargestellt. Dabei wird die Positionierung der Informationselemente zueinander innerhalb der Anordnung derart bestimmt, daß folgendes Kriterium erfüllt ist: Falls ein Anlagenteil ein Merkmal aufweist, ist der Abstand deren Informationselemente zueinander kleiner als ein vorgebbarer erster Grenzwert. Falls ein Anlagenteil ein Merkmal nicht aufweist, ist der Abstand zwischen deren Informationselementen größer als ein vorgebbarer zweiter Grenzwert.

Um dem Bedienpersonal die für eine Identifizierung von für den jeweiligen Anlagenzustand wichtigen Informationen in besonders einfacher und/oder übersichtlicher Weise zu ermöglichen, werden die innerhalb des Anlagenprozesses aufgenommenen Meßdaten oder daraus abgeleitete Parameter gefiltert. Zweckmäßigerweise wird anhand eines vorgegebenen Kriteriums bestimmt, welche der Anlagenteile dargestellt werden. Beispielsweise können diejenigen Anlagenteile dargestellt werden, die in einem Merkmal, wie z.B. im Zustand "Stärung" / "Nicht Störung" oder im Status AN/AUS, übereinstimmen. Vorteilhafterweise wird ein Zeitfenster als Kriterium vorgegeben, so daß Zusammenhänge oder Wechselwirkungen zwischen denjenigen Anlagenteilen erkannt werden, die innerhalb eines bestimmten Zeitraums Störungen melden. Dadurch können Rückschlüsse auf ursächliche Störungen - im Gegensatz zu symptomatischen Störungen - gezogen werden.

Um einen Entwicklungstrend auf eine Störung hin frühzeitig erkennen zu können, kann vorteilhafterweise ein Zeitfenster auch als Merkmal vorgegeben werden. Dadurch ist eine zeitliche Ordnung der die Anlagenteile und Merkmale darstellenden Informationselemente möglich. Vorzugsweise werden Informationselemente aufeinanderfolgender Ereignismeldungen als Zustandskomplex gemeinsam dargestellt. Der Zustandskomplex kann dabei eine charakteristische Struktur aufweisen, deren Muster in unmittelbarem Zusammenhang mit einem Systemverhalten steht. Dabei wird zweckmäßigerweise aus der gemeinsamen Darstellung der Informationselemente ein Systemzustand prognostiziert. Dadurch ist es möglich, einer sich anbahnenden Störung bereits im Anfangsstadium geeignet entgegenzuwirken.

Gemäß einer besonders vorteilhaften Weiterbildung wird dieser Zustandskomplex mit einem aus anlagenspezifischem Wissen abgeleiteten Referenzkomplex verglichen. In diesem Referenzkomplex sind dann für ein bestimmtes Anlagenverhalten charakteristische Muster vorgegeben. Beispielsweise kann eine auf einen Schnellschluß eines Sicherheitsventils in einer Kraftwerksanlage hinlaufende Störung in Form eines Referenzkomplexes vorliegen. Durch Vergleichen des Zustandskomplexes mit diesem Referenzkomplex kann ein sich on-line anbahnender Schnellschluß daher aufgrund der diesem vorausgehenden Störungsmeldungen erkannt werden.

Der Informationsraum, in dem die Informationselemente dargestellt werden, ist n-dimensional, vorzugsweise 3-dimensional. Zur Festlegung der Position jedes Informationselementes in diesem Informationsraum werden daher vorzugsweise drei räumliche Koordinaten ermittelt.Auf einem geeigneten Anzeigegerät, z.B. auf einem Bildschirm, ist somit eine 3-dimensionale Darstellung in der Leitwarte möglich.

Ausführungsbeispiele der Erfindung werden anhand einer Zeichnung näher erläutert. Darin zeigen:
- Figur 1: ein Funktionsschema mit zur Durchführung eines Analyseverfahrens für eine technische Anlage vorgesehenen Komponenten,
- Figur 2: eine für einen Betriebszustand der technischen Anlage charakteristische Anordnung von Anlagenteile und deren Merkmale repräsentierenden Informationselementen, und
- Figur 3: einen für den Trend des Betriebsverhaltens der Anlage charakteristischen Zustandskomplex.

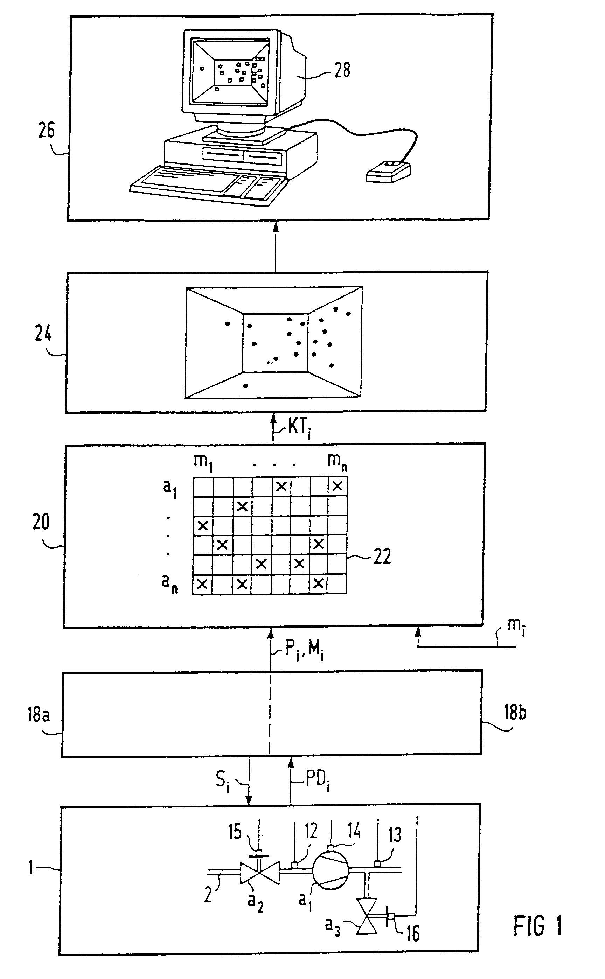

Der im Ausführungsbeispiel gemaß Figur 1 dargestellte Prozeßablauf innerhalb einer Anlagenkomponente 1 ist Teil eines Gesamtprozesses einer nicht näher dargestellten Kraftwerksanlage. Die Anlagenkomponente 1 umfaßt eine in eine Dampfleitung 2 geschaltete Pumpe a₁ mit vorgeschaltetem Dampfventil a₂ und in einer Abzweigleitung 8 ein Abblaseregelventil a₃. Zwischen der Pumpe a₁ und dem Dampfventil a₂ ist ein Durchflußsensor 12 vorgesehen, mit dem die pro Zeiteinheit durch die Dampfleitung 2 strömende Dampfmenge erfaßt wird. Außerdem ist auf der Druckseite der Pumpe a₁ ein Drucksensor 13 vorgesehen. Die Pumpe a₁ ist mit einem Drehzahlsensor 14 versehen. Das Dampfventil a₂ sowie das Abblaseregelventil a₃ weisen jeweils ein Steuer- und Meldeelement 15 bzw. 16 auf. Die Pumpe a₁ und das Dampfventil a₂ sowie das Abblaseregelventil a₃ werden im folgenden auch als Anlagenteile a₁ bis a₃ bezeichnet.

Von den Sensoren 12, 13 und 14 erfaßte Meßwerte sowie von den Meldeelementen 15 und 16 abgegebene Meldesignale werden in Form von Prozeßdaten PDᵢ einem Automatisierungssystem 18a und einem leittechnischen Informationssystem 18b zugeführt.

In Automatisierungseinheiten des Automatisierungs- und Informationssystem 18a, 18b der Kraftwerksanlage werden die Prozeßdaten PDᵢ vorverarbeitet. Gegebenenfalls werden Steuersignale Sᵢ an die Anlagenteile aᵢ der Anlagenkomponente 1 abgegeben. Die zusammenlaufenden Informationen über Messungs-, Regelungs- und Steuerungsereignisse sowie über die Signalerzeugung werden in dem Informationssystem 18b hinterlegt. Durch die innerhalb des Automatisierungs- und Informationssystems 18a, 18b ablaufenden Prozesse wird die Kraftwerksanlage mit ihren Anlagenteilen aᵢ, wie z.B. der Pumpe a₁ sowie den Ventilen a₂ und a₃ der Anlagenkomponente 1, automatisch gesteuert.

Von dem Automatisierungs- und Informationssystem 18a, 18b werden anhand der Prozeßdaten PDᵢ sowie der Steuersignale Sᵢ für den Anlagenprozeß und somit auch für den innerhalb der Anlagenkomponente 1 ablaufenden Prozeß relevante Parameter Pᵢ generiert und in Meldungen Mᵢ zusammengefaßt. Diese Meldungen Mᵢ umfassen auch die Anlagenteile aᵢ identifizierende Kennungen.

Die Parameter Pᵢ und/oder die Meldungen Mᵢ werden einem Analysemodul 20 bereitgestellt. Dem Analysemodul 20 werden darüber hinaus den Anlagenprozeß charakterisierende Merkmale mi zugeführt. Diese Merkmale Mᵢ sind sowohl Status-, Störungs- und Zustandsmeldungen als auch funktionelle, verfahrenstechnische und konstruktive Details der Anlagenteile aᵢ oder Anlagenkomponenten, wobei diese Details die Arbeitsweise der Anlagenteile und deren Anordnung und Zuordnung innerhalb der Gesamtanlage beschreiben. Innerhalb des Analysemoduls 20 wird für jeden Anlagenteil aᵢ das Vorhandensein der Merkmale mᵢ anhand der Parameter Pᵢ oder aufgrund der Meldungen Mᵢ für ein vorgebbares Zeitfenster geprüft. Dazu wird für jedes Zeitfenster ein Kontext KTᵢ generiert, in dem in Form einer Matrix 22 eine eindeutige Zuordnung von Merkmalen mᵢ zu Anlagenteilen aᵢ durchgeführt wird.

Anhand von in den Kontexten KTᵢ vorhandenen Informationen werden den Anlagenteilen aᵢ und/oder den Merkmalen mᵢ in einem Positionierungsmodul 24 räumliche Koordinaten zugeordnet. Dabei wird nach dem Prinzip "kontextuelle Nähe entspricht räumlicher Nähe" der Grad der Korrelationen zwischen Kombinationen von Anlagenteilen aᵢ und zwischen Kombinationen von Merkmalen mᵢ bestimmt, indem beispielsweise für zwei Anlagenteile aᵢ das Verhältnis der Anzahl der ihnen gemeinsamen Merkmale mᵢ zur Anzahl der Merkmal mᵢ, die mindestens eines der beiden Anlagenteile aᵢ aufweist, bestimmt wird. Aus diesem Verhältnis ergibt sich dann ein quantitatives Maß für den Grad der Korrelation zwischen diesen beiden Anlagenteilen aᵢ. Weisen z.B. beide Anlagenteile aᵢ nur gemeinsame Merkmale mᵢ auf, so sind die beiden Anlagenteile aᵢ hochgradig korreliert. Demgegenüber sind zwei Anlagenteile aᵢ nicht miteinander korreliert, wenn sie sich in allen Merkmalen mᵢ unterscheiden. Dieses quantitative Maß der Korrelation zwischen zwei Anlagenteilen aᵢ wird in einen entsprechenden Abstand ihrer räumlichen Koordinaten zueinander transformiert. Die Korrelation der Merkmale mᵢ zueinander wird analog bestimmt, indem die Anzahl der sie aufweisenden Anlagenteile aᵢ sinngemäß herangezogen wird.

Auf der Grundlage dieser räumlichen Zuordnung wird eine grafische Darstellung für die Anlagenteile aᵢ und die Merkmale mᵢ in einem Grafikmodul 26 erzeugt. Von dem Grafikmodul 26 werden zunächst Informationselemente Iᵢ₍ₐᵢ₎ für die Anlagenteile aᵢ und Informationselemente Iᵢ₍ₘᵢ₎ für die Merkmale mᵢ generiert und anhand der räumlichen Koordinaten auf einer Anzeige 28 positioniert. Die gemeinsame Anordnung der Informationselemente Iᵢ₍ₐᵢ₎ und Iᵢ₍ₘᵢ₎ erfolgt dabei unter folgender Bedingung: Der Abstand zwischen einem Informationselement Iᵢ₍ₘᵢ₎ und einem Informationselement Iᵢ₍ₐᵢ₎ überschreitet einen vorgegebenen ersten Grenzwert dann nicht, wenn dieses Anlagenteil aᵢ dieses Merkmal mᵢ aufweist, und dieser Abstand unterschreitet einen vorgegebenen zweiten Grenzwert dann nicht, wenn dieses Anlagenteil aᵢ dieses Merkmal mᵢ nicht aufweist. Mit anderen Worten: Wenn ein Anlagenteil aᵢ ein Merkmal mᵢ aufweist, dürfen die sie repräsentierenden Informationselemente Iᵢ₍ₐᵢ₎ und Iᵢ₍ₘᵢ₎ nicht zu weit voneinander entfernt positioniert sein. Wenn dagegen ein Anlagenteil aᵢ ein Merkmal mᵢ nicht aufweist, dürfen sich die sie repräsentierenden Informationselemente Iᵢ₍ₐᵢ₎ und Iᵢ₍ₘᵢ₎ nicht zu nahe sein.

Führt z.B. eine Störung in einem in die Dampfleitung 2 geschalteten (nicht dargestellten) Anlagenteil zu einer Druckerhöhung in der Dampfleitung 2, so sinkt die Drehzahl der Pumpe a₁ ab, und das Abblaseregelventil a₃ öffnet. Das Automatisierungssystem 18a schließt daraufhin das Dampfventil a2, so daß sich die Drehzahl der Pumpe a₁ normalisiert und das Abblaseregelventil a₃ wieder schließt. Nach einer darauf folgenden erneuten Öffnung des Dampfventils a₂ durch das Automatisierungssystem 18a erhöht sich wiederum der Druck innerhalb der Dampfleitung 2, so daß sich der Vorgang so lange wiederholt, bis die Störung beseitigt ist.

Diesen Vorgang beschreibende Prozeßdaten PDᵢ, d.h. die vom Durchflußsensor 12 erfaßte Dampfmenge und der vom Drucksensor 13 erfaßte Dampfdruck sowie die vom Drehzahlsensor 14 erfaßte Pumpendrehzahl, werden dem leittechnischen Informationssystem 18b zugeführt. Als Reaktion auf die im leittechnischen Informationssystem 18b eintreffenden Prozeßdaten PDᵢ werden Steuersignale Sᵢ zum Öffnen oder Schließen der Ventile a₂ und a₃ vom Automatisierungssystem 18a an die Anlagenkomponente 1 gegeben.

Zur Analyse werden aus den Prozeßdaten PDᵢ und den Steuersignalen Si Meldungen Mᵢ erstellt. Derartige Meldungen Mᵢ sind z.B.: "Zeitpunkt t₁ - Anlagenkomponente 1 - Drucksensor 13 - Druck zu hoch - Störung - Priorität hoch"; "Zeitpunkt t₂ - Anlagenkomponente 1 - Drehzahlsensor 14 - Drehzahl zu niedrig - Störung - Priorität hoch"; "Zeitpunkt t₃ - Anlagenkomponente 1 - Abblaseventil a₃ -Statussignal auf"; "Zeitpunkt t₃ - Anlagenkomponente 1 - Dampfventil a₂ - Statussignal zu"; usw.

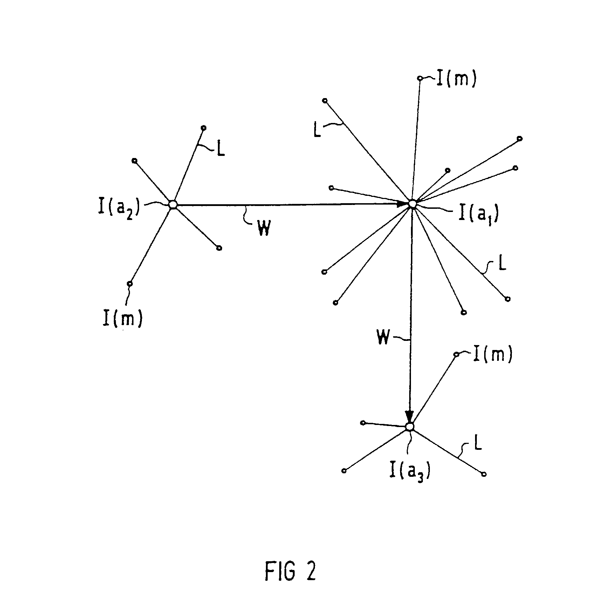

Im Analysemodul 20 werden anhand dieser Meldungen Mᵢ den Anlagenteilen a₁, a₂ und a₃ Merkmale mᵢ zugeordnet, d.h. anhand der Meldungen Mᵢ wird nun das Vorhandensein jedes Merkmals mᵢ dieser Anlagenteile a₁, a₂ und a₃ geprüft. Alle zum Meldungsbestandteil "Anlagenkomponente 1" gehörenden Merkmale mᵢ werden somit jedem der Anlagenteile a₁, a₂ und a₃ zugeordnet. Bereits dadurch stimmen die Anlagenteile a₁, a₂ und a₃ in einer Vielzahl von Merkmalen mᵢ überein, so daß sie in einem hohen Grad korreliert sind. Dementsprechend werden diesen Anlagenteilen a₁ bis a₃ im Positionierungsmodul 24 nahe beieinanderliegende räumliche Koordinaten zugeordnet. Eine aufgrund dieser räumlichen Zuordnung im Grafikmodul 26 erstellte grafische Darstellung ist in Figur 2 dargestellt.

Wie aus Figur 2 ersichtlich, sind dabei die den Anlagenteilen a₁ bis a₃ und den Merkmalen mᵢ zugeordneten Informationselemente Iᵢ₍ₐᵢ₎ bzw. Iᵢ₍ₘᵢ₎ gemeinsam dargestellt. Für eine bessere Übersicht sind die Informationselemente Iᵢ₍ₘᵢ₎ der Merkmale mᵢ und die Informatinselemente Iᵢ₍ₐᵢ₎ der diese Merkmale mᵢ aufweisenden Anlagenteile a₁ bis a₃ durch sogenannte Inzidenzlinien L verbunden. Die Informationselemente Iᵢ₍ₐᵢ₎ sind in Form von Quadraten oder Würfeln dargestellt, während die Informationselemente Iᵢ₍ₘᵢ₎ der Merkmale mi in Form von Kreisen oder Kugeln veranschaulicht sind. Die Einflußnahme der Anlagenteile a₁, a₂ und a₃ aufeinander ist dabei durch Wirkungspfeile W symbolisiert.

Die Meldungen oder Ereignismeldungen Mᵢ weisen auch Zeitmerkmale auf. Anhand dieser Zeitmerkmale kann eine zeitliche Korrelation der Anlagenteile aᵢ abgeleitet werden. Beispielsweise weisen zwei der oben genannten Meldungen Mᵢ das gleiche Zeitmerkmal "t₃" auf, so daß dadurch auf Gleichzeitigkeit der zugehörigen Ereignisse geschlossen wird.

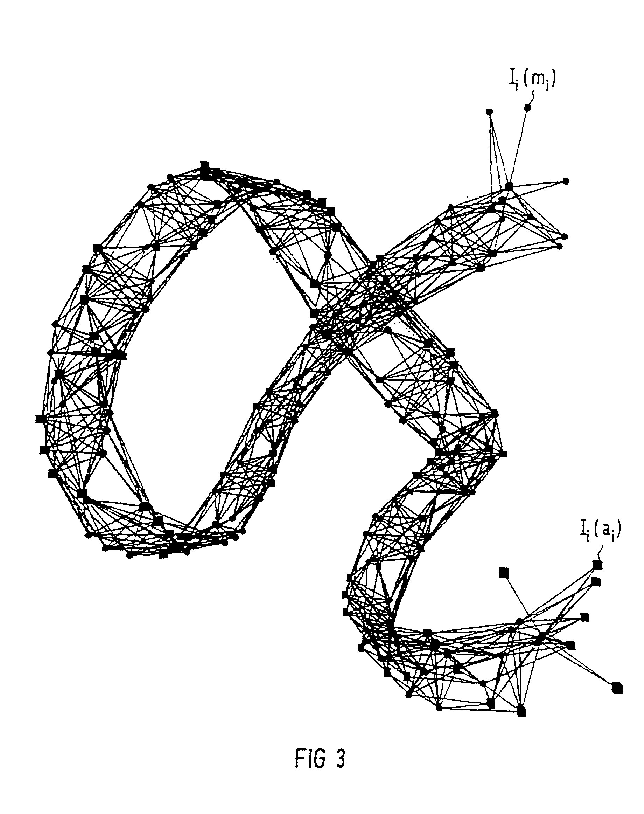

Zeitlich und auf andere Art korrelierte Informationselemente I_{i(ai, mi)} werden zum Zweck einer Diagnose in Form eines Zustandskomplexes dargestellt. Dies ist in Figur 3 gezeigt. Je nach Art einer Störung weist ein derartiger Zustandskomplex ein charakteristisches Muster auf, anhand dessen die Art und zeitliche Entwicklung der Störung identifiziert werden kann. Ein derartiger Zustandskomplex kann auch als Referenzkomplex abgespeichert sein, der zu einem Vergleich mit aktuellen Ereignissen herangezogen werden kann.

## Patentansprüche

1. Verfahren zur Analyse von Prozeßdaten einer technischen Anlage, insbesondere einer Kraftwerksanlage, deren Anlagenteile (ai) automatisch gesteuert werden,
- bei dem den Anlagenprozeß charakterisierende Merkmale (mᵢ) vorgegeben und für den Anlagenprozeß relevante Parameter (Pi) bereitgestellt werden,
- bei dem für jeden Anlagenteil (aᵢ) das Vorhandensein jedes Merkmals (mi) anhand der Parameter (Pᵢ) geprüft wird,
- bei dem anhand von verschiedenen Anlagenteilen (aᵢ) gemeinsamen Merkmalen (mᵢ) und verschiedenen Merkmalen (mᵢ) gemeinsamen Anlagenteilen (aᵢ) Korrelationen zwischen Kombinationen von Anlagenteilen (aᵢ) bzw Merkmalen (mᵢ) bestimmt werden, und
- bei dem Anlagenteile (aᵢ) und/oder Merkmale (mᵢ) als Informationselemente (I₍ₐᵢ₎, I₍ₘᵢ₎) derart zueinander positioniert dargestellt werden, daß der Abstand (L, W) zwischen jeweils zwei Informationselementen (I₍ₐᵢ₎, I₍ₘᵢ₎) den Grad ihrer Korrelation repräsentiert.

2. Verfahren nach Anspruch 1, **dadurch gekennzeichnet**, daß spezifische Kennung von Anlagenteilen (aᵢ) und die die jeweiligen Betriebszustände dieser Anlagenteile (aᵢ) betreffenden Parameter (Pᵢ) zu Ereignismeldungen (Mi) Zusammengefaßt werden.

3. Verfahren nach Anspruch 1 oder 2, **dadurch gekennzeichnet**, daß die Positionierung von Anlagenteile (aᵢ) repräsentierenden Informationselementen (Iᵢ₍ₐᵢ₎) und von Merkmale (mi) repräsentierenden Informationselementen (Iᵢ₍ₘᵢ₎) derart bestimmt werden, daß der Abstand zwischen einem ein Merkmal (mᵢ) repräsentierenden Informationselement (Iᵢ₍ₘᵢ₎) und einem ein Anlagenteil (aᵢ) repräsentierenden Informationselementen (Iᵢ₍ₐᵢ₎) einen vorgebbaren ersten Grenzwert dann nicht überschreitet, wenn dieses Anlagenteil (aᵢ) dieses Merkmal (mᵢ) aufweist, und daß dieser Abstand einen vorgebbaren zweiten Grenzwert dann nicht unterschreitet, wenn dieses Anlagenteil (aᵢ) dieses Merkmal (mᵢ) nicht aufweist.

4. Verfahren nach einem der Ansprüche 1 bis 3, **dadurch gekennzeichnet**, daß anhand eines vorgebbaren Kriteriums bestimmt wird, welche der Anlagenteile (aᵢ) dargestellt werden.

5. Verfahren nach Anspruch 4, **dadurch gekennzeichnet**, daß ein Zeitfenster als Kriterium vorgegeben wird.

6. Verfahren nach einem der Ansprüche 1 bis 5, **dadurch gekennzeichnet**, daß ein Zeitfenster als Merkmal (mᵢ) vorgegeben wird.

7. Verfahren nach einem der Ansprüche 2 bis 6, **dadurch gekennzeichnet**, daß Informationselemente (I_{i(ai),} Iᵢ₍ₘᵢ₎) aufeinanderfolgender Ereignismeldungen (Mᵢ) als Zustandskomplex gemeinsam dargestellt werden.

8. Verfahren nach einem der Ansprüche 1 bis 7, **dadurch gekennzeichnet**, daß aus der gemeinsamen Darstellung der Informationselemente (I_{i(ai),} Iᵢ₍ₘᵢ₎) ein Systemzustand prognostiziert wird.

9. Verfahren nach Anspruch 7 oder 8, **dadurch gekennzeichnet**, daß der Zustandskomplex mit einem aus anlagenspezifischem Wissen abgeleiteten Referenzkomplex verglichen wird.

10. Verfahren nach einem der Ansprüche 1 bis 9, **dadurch gekennzeichnet**, daß zur Festlegung der Position jedes Informationselementes (I_{i(ai),} Iᵢ₍ₘᵢ₎) drei räumliche Koordinaten ermittelt werden.

## Claims

1. Method for the analysis of process data of an industrial plant, in particular a power station plant, the parts (aᵢ) of which plant are automatically controlled,
- in which features (mᵢ) characterizing the plant process are prescribed and parameters (Pᵢ) relevant to the plant process are provided,
- in which for each part (aᵢ) of the plant the presence of each feature (mᵢ) is checked using the parameters (Pᵢ),
- in which, using features (mᵢ) common to various parts (aᵢ) of the plant and parts (aᵢ) of the plant common to various features (mᵢ), correlations between combinations of parts (aᵢ) of the plant and features (mᵢ) are determined, and
- in which parts (aᵢ) of the plant and/or features (mᵢ) are represented as information elements (I₍ₐᵢ₎, I₍ₘᵢ₎) positioned in relation to one another in such a way that the distance (L, W) between two information elements (I₍ₐᵢ₎, I₍ₘᵢ₎) in each case represents the degree of their correlation.

2. Method according to Claim 1, characterized in that specific identification of parts (aᵢ) of the plant and the parameters (Pᵢ) relating to the respective operating states of these parts (aᵢ) of the plant are combined to form event messages (Mᵢ).

3. Method according to Claim 1 or 2, characterized in that the positioning of information elements (Iᵢ₍ₐᵢ₎) representing parts (aᵢ) of the plant and of information elements Iᵢ₍ₘᵢ₎) representing features (mᵢ) are determined in such a way that the distance between an information element (Iᵢ₍ₘᵢ₎) representing a feature (mᵢ) and an information element (Iᵢ₍ₐᵢ₎) representing a part (aᵢ) of the plant does not exceed a prescribable first limiting value if this part (aᵢ) of the plant exhibits this feature (mᵢ) and that this distance does not fall below a prescribable second limiting value if this part (aᵢ) of the plant does not exhibit this feature (mᵢ).

4. Method according to one of Claims 1 to 3, characterized in that, using a prescribable criterion, it is determined which of the parts (aᵢ) of the plant are represented.

5. Method according to Claim 4, characterized in that a time window is prescribed as criterion.

6. Method according to one of Claims 1 to 5, characterized in that a time window is prescribed as feature (mᵢ).

7. Method according to one of Claims 2 to 6, characterized in that information elements (Iᵢ₍ₐᵢ₎, Iᵢ₍ₘᵢ₎) of successive event messages (Mᵢ) are represented together as a state complex.

8. Method according to one of Claims 1 to 7, characterized in that, from the common representation of the information elements (Iᵢ₍ₐᵢ₎, Iᵢ₍ₘᵢ₎), a system state is forecast.

9. Method according to Claim 7 or 8, characterized in that the state complex is compared with a reference complex derived from plant-specific knowledge.

10. Method according to one of Claims 1 to 9, characterized in that, to fix the position of each information element (Iᵢ₍ₐᵢ₎, Iᵢ₍ₘᵢ₎) three spatial coordinates are determined.

## Revendications

1. Procédé d'analyse de données de processus d'une installation industrielle, notamment d'une centrale électrique, dont les parties d'installation (aᵢ) sont commandées automatiquement
- dans lequel on prescrit des caractéristiques (mᵢ) caractérisant le processus de l'installation et on prépare des paramètres (Pᵢ) significatifs pour le processus de l'installation,
- dans lequel on vérifie pour chaque partie d'installation (aᵢ) la présence de chaque caractéristique (mᵢ) à partir des paramètres (Pᵢ),
- dans lequel à partir de caractéristiques (mᵢ) communes à diverses parties d'installation (aᵢ) et de parties d'installation (aᵢ) communes à diverses caractéristiques (mᵢ), on détermine des corrélations entre des combinaisons de parties d'installation (aᵢ) respectivement de caractéristiques (mᵢ), et
- dans lequel des parties d'installation (aᵢ) et/ou des caractéristiques (mᵢ), en tant qu'éléments d'information (I₍ₐᵢ₎, I₍ₘᵢ), sont représentés en étant positionnés réciproquement les uns par rapport aux autres de manière telle, que la distance (L, W) entre respectivement deux éléments d'information (I₍ₐᵢ₎, I₍ₘᵢ₎) représente le degré de leur corrélation.

2. Procédé selon la revendication 1, **caractérisé** en ce que les critères spécifiques de parties d'installation (aᵢ) et les paramètres (Pᵢ) concernant les états de fonctionnement respectifs de ces parties d'installation (aᵢ), sont regroupés en messages d'événement (Mᵢ).

3. Procédé selon la revendication 1 ou 2, **caractérisé** en ce que le positionnement d'éléments d'information (Iᵢ₍ₐᵢ₎) représentant des parties d'installation (aᵢ) et d'éléments d'information (Iᵢ₍ₘᵢ₎) représentant des caractéristiques (mᵢ) est déterminé de manière telle que la distance entre un élément d'information (Iᵢ₍ₘᵢ₎) représentant une caractéristique (mᵢ) et un élément d'information (Iᵢ₍ₐᵢ₎) représentant une partie d'installation (aᵢ) ne soit pas supérieure à une première valeur limite pouvant être prescrite, si cette partie d'installation (aᵢ) présente cette caractéristique (mᵢ), et cette distance n'est pas inférieure à une seconde valeur limite pouvant être prescrite, si cette partie d'installation (aᵢ) ne présente pas cette caractéristique (mᵢ).

4. Procédé selon l'une des revendications 1 à 3, **caractérisé** en qu'à partir d'un critère pouvant être prescrit, on détermine les parties d'installation (aᵢ) qui vont être représentées.

5. Procédé selon la revendication 4, **caractérisé** en ce qu'une fenêtre de temps est prescrite en guise de critère.

6. Procédé selon l'une des revendications 1 à 5, **caractérisé** en ce qu'une fenêtre de temps est prescrite en guise de caractéristique (mᵢ).

7. Procédé selon l'une des revendications 2 à 6, **caractérisé** en ce que les éléments d'information (Iᵢ₍ₐᵢ₎, Iᵢ₍ₘᵢ₎) de messages d'événement (Mᵢ) successifs sont représentés en commun en tant que complexe d'état.

8. Procédé selon l'une des revendications 1 à 7, **caractérisé** en ce qu'à partir de la représentation commune des éléments d'information (Iᵢ₍ₐᵢ₎, Iᵢ₍ₘᵢ₎, on pronostique un état du système.

9. Procédé selon la revendication 7 ou 8, **caractérisé** en ce que le complexe d'état est comparé à un complexe de référence dérivé des connaissances spécifiques à l'installation.

10. Procédé selon l'une des revendications 1 à 9, **caractérisé** en ce que pour fixer la position de chaque élément d'information (Iᵢ₍ₐᵢ₎, Iᵢ₍ₘᵢ₎), on détermine trois coordonnées dans l'espace.
